# EUROPEAN PATENT APPLICATION

(11) **EP 1 883 202 A2**
(43) Date of publication of application: **30.01.2008**
(21) Application number: 07112723.7
(22) Date of filing: 18.07.2007
(51) Int. Cl.: H04L 29/06

(54) **Apparatus and method for creating unique identifier**

(30) Priority: 24.07.2006 KR 20060069357
(71) Applicant: SAMSUNG ELECTRONICS CO., LTD., Suwon-si Gyeonggi-do 442-742 (KR)
(72) Inventor: Chang, Myung-soo, Seoul (KR); Kim, Hyoung-shick, Seodaemun-gu,Seoul (KR); Kim, Sang-hyeon, Seoul (KR)
(74) Representative: Robinson, Ian Michael

(57) **Abstract**

A method and apparatus for creating a unique identifier (ID) is provided. The apparatus includes a searcher (210) that searches the device for a device description document, a reader (220) that reads a universally unique identifier (UUID) of the device, and a creator (230) that creates a unique ID of the device using the read UUID.

## Description

### BACKGROUND OF THE INVENTION

### Field of the Invention

The apparatus and methods consistent with the present invention relate creating a unique identifier (ID), and more particularly, to creating a unique identifier that provides communication between devices and a content service by connecting a device supporting a specific service and a communication environment of an existing network infrastructure.

### Description of the Related Art

Digital rights management (DRM) was originally used to prevent unauthorized copying of content such as digital music, moving images and e-books via the Internet. Recently, it has been used in various other areas, e.g., mobile and industrial document security, digital broadcasts, and digital home entertainment.

DRM was introduced because of the characteristics of digital content. Unlike analog data, digital data can be copied without loss and can be easily reused, processed, and distributed to other people, and only small costs are incurred to copy and distribute digital content. However, significant costs, labor, and time are needed to produce digital content. Thus, when the digital data is copied and distributed without permission, the digital content producer loses profit, and the incentive to create digital content decreases. As a result, the development of digital content, and therefore the businesses that create this content are hindered.

Several efforts have been made to protect digital content. Conventionally, digital content protection has concentrated on preventing non-permitted access to digital content, and permitting only people who have paid fees to access the digital content. Thus, people who paid fees for the digital content are allowed to use unencrypted digital content whereas people who did not are not allowed to use the content. In the case, when a person paid fees intentionally distributes the digital content to other people, however, these people can use the digital content without paying fees. DRM was introduced to solve this program.

In DRM, anyone is allowed to freely access encoded digital content but a license referred to as a rights object is needed to decode and execute the digital content. The rights object refers to a digital content right that has a content decryption key that decodes digital content, permission information that defines a form of digital content, constraint information that limits the use of digital content or information that includes the type of right allotted when digital content is used. Thus, when DRM is applied, it is possible to efficiently protect digital content.

Recently, DRM vendors released various DRM products using unique technologies in order to prevent illegal copying of digital content and to protect copyrights; thus, interoperability between DRM technologies is not guaranteed. That is, since each DRM vendor supports different file formats, codecs, proprietary content-protection, or combinations thereof in embodying DRM, playing the content is limited when a user plays digital content the user bought at an online store using his/her player or multiple players.

To guarantee inoperability of DRM, many international standards organizations such as CORAL, the MPEG-21 group, open mobile alliance (OMA), digital media project (DMP) have developed DRM standards technologies. For example, OMA introduced OMA DRM v1.0 of a phase 1 (candidate) step, and then the OMA DRM v2.0 standard. The MPEG-21 group developed a universally usable standard technology of DRM framework.

CORAL introduced networked environment for media orchestration (NEMO) technology for inoperability between DRM technologies in order to use DRM-protected content anywhere at anytime. The NEMO technology, as service-oriented architecture, enables a user to use content, regardless of device type, if the user legitimately has rights to the content. That is, the NEMO technology is to perform inoperability among comprehensive DRM-devices, formats, networks and service types.

When a predetermined wired or wireless device tries to use DRM content, the device has to be personalized, and then the device may obtain personality information including its unique ID and a certificate. The above process is called personalization. The device that performed the personalization is recognized, thereby allowing mutual communication and access to DRM content, regardless of device type.

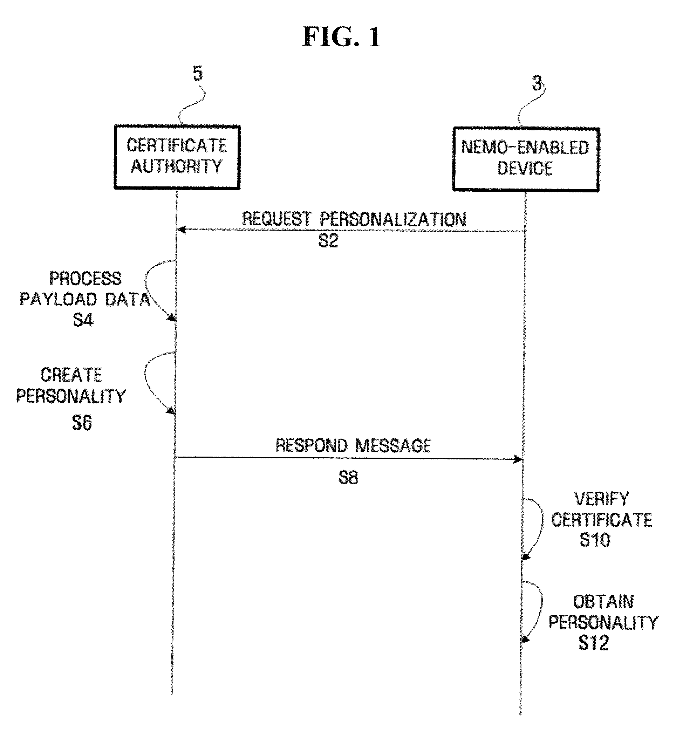

FIG. 1 depicts a NEMO personalization process.

In FIG. 1, a personalization process between a NEMO-enabled device 3 that operates based on a service framework for interoperability and an external certificate authority, which is described as an example.

The NEMO-enabled device 3 (a first device) requests a personalization from an external certificate authority 5 (S2). Here, the NEMO-enabled device 3 and the certificate authority share confidential information. When the NEMO-enabled device 3 requests the personalization, confidential information may be used in order for the certificate authority to determine whether the NEMO-enabled device 3 has proper rights. A message for requesting the personalization transmitted by the NEMO-enabled device 3 may include information related to an identity (ID) of the NEMO-enabled device 3, and may be included in payload data. The payload data may include information on a type of personalization (e.g., personalization type = NEMO), the certificate authority, and secret keys for a communication that assures integrity and confidentiality.

The certificate authority verifies whether the request of the NEMO-enabled device 3 is legal, and processes the payload data (S4). At this time, the certificate authority can verify whether the request of the NEMO-enabled device 3 is legal, using the secret value shared with the NEMO-enabled device 3.

In next step, the certificate authority 5 creates personality information that includes NEMO ID information tobegranted to the NEMO-enabled device 3, and transmits the created information as a respond message to the NEMO-enabled device 3 (S6 and S8). More particularly, the personality information may further include a certificate containing a public key, individual keys, and information related to a fingerprint. The certificate may be created using the NEMO ID (i.e., ID of the NEMO-enabled device) and the public key. The above information is included in the payload data that is transmitted to the NEMO-enabled device 3.

The NEMO-enabled device 3 verifies the certificate (S10) in the received response message, and obtains the personality information and S12.

Then, the NEMO-enabled device can communicate with another NEMO-enabled device, and use DRM content, regardless of the type of device model.

In the NEMO network, however, there is no technology for which network infrastructure is used when performing a communication between NEMO-enabled devices.

### SUMMARY OF THE INVENTION

According to the present invention there is provided an apparatus and method as set forth in the appended claims. Other features of the invention will be apparent from the dependent claims, and the description which follows.

An aspect of the present invention provides an apparatus and method for creating a unique ID that connects a device supporting a specific service to a communication environment of the existing network infrastructure, thereby providing a communication between devices and a content service.

These and other aspects and features of the present invention will become clear to those skilled in the art upon review of the following description, attached drawings and appended claims.

According to an aspect of the present invention, there is provided a unique-ID-creating apparatus corresponding to an apparatus included in a predetermined device connected to a predetermined network, the apparatus including a searcher that searches the device for a device description document, a reader that reads a universally unique identifier (UUID) of the device, and a creator that creates a unique ID of the device using the read UUID.

According to another aspect of the present invention, there is provided a unique-ID-creating method corresponding to an apparatus included in a predetermined device connected to a predetermined network, the method including searching the device for a device description document, reading a universally unique identifier (UUID) of the device, and creating a unique ID of the device using the read UUID.

### BRIEF DESCRIPTION OF THE DRAWINGS

The above and other features and advantages of the present invention will become apparent by describing in detail exemplary embodiments thereof with reference to the attached drawings, in which:
FIG. 1 depicts a NEMO personalization process;
FIG. 2 is a block diagram of a unique-identifier-creating apparatus;
FIG. 3 is a flowchart of creating a unique identifier using FIG. 2;
FIG. 4 depicts a personalization process consistent with an exemplary embodiment of the present invention;
FIG. 5 depicts an UPnP operation performed between a control point and a controlled device consistent with an exemplary embodiment of the present invention;
FIG. 6 illustrates a case where a NEMO-enabled device uses content on an Universal Plug and Play(UPnP) network consistent with an exemplary embodiment of the present invention.

### DETAILED DESCRIPTION OF EXEMPLARY EMBODIMENTS OF THE INVENTION

Aspects and features of the aspects of the present invention and methods of accomplishing the same may be understood more readily by reference to the following detailed description of exemplary embodiments and the accompanying drawings. The aspects of the present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims.

Hereinafter, the present invention will be described on the basis of the UPnP network (conventional network infrastructure); however, Bluetooth, Java intelligent network infrastructure (JINI), universal description, discovery, and integration (UDDI) may be also applied thereto.

The NEMO-enabled device will be described as a main example; however, the present invention can be also applied to devices for providing communication and other services using the existing network infrastructure.

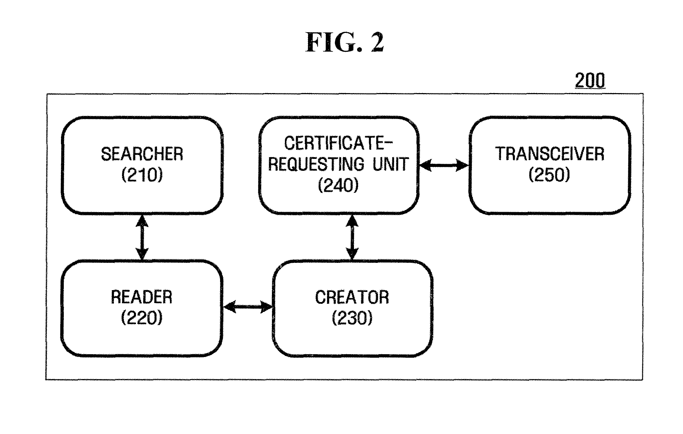

FIG. 2 is a block diagram of a unique-identifier-creating apparatus 200.

A unique-ID-creating apparatus 200 includes a searcher 210, a reader 220, a creator 230, a certificate-requesting unit 240, and a transceiver 250, which may be included in a predetermined NEMO-enabled device.

The searcher 210, as an element of the apparatus 200 included in a predetermined device that joins a predetermined network, searches the predetermined device for a device description document. The device description document may include manufacturing information of a device supplier, i.e., universal unique identifier (UUID), a model name, a serial number, a manufacturer name, and a manufacturer URL. The device description document may include not only a URL for a control, an event, and a presentation but also a list of many built-in devices and services.

The reader 220 reads the UUID of the found device description document. Generally, the device description document is expressed as XML. The reader 220 can obtain the UUID by parsing the XML document.

The creator 230 creates a unique ID of the predetermined device using the read UUID. Preferably, the unique ID is the same as the UUID.

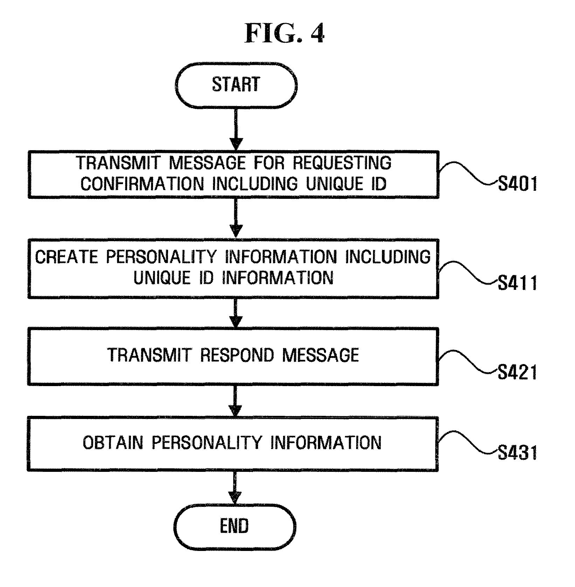

The certificate-requesting unit 240 transmits the created unique ID to the certificate authority in order to request a confirmation that the predetermined device uses the unique ID as identifying information. For example, the NEMO-enabled device requests a confirmation that the NEMO-enabled device uses the unique ID as its NEMO ID by transmitting the created unique to the certificate authority. Through the conventional personalization, it is also possible to perform a communication between devices. A more detailed description is provided with reference to FIG. 4.

The transceiver 250 transmits and receives data used in the personalization and other data between devices on a network.

The term "module", as used herein, means, but is not limited to, a software or hardware component, such as a Field Programmable Gate Array (FPGA) or an Application Specific Integrated Circuit (ASIC), which performs certain tasks. A module may advantageously be configured to reside on the addressable storage medium and configured to execute in one or more processors. Thus, a module may include, by way of example, components, such as software components, aspect-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

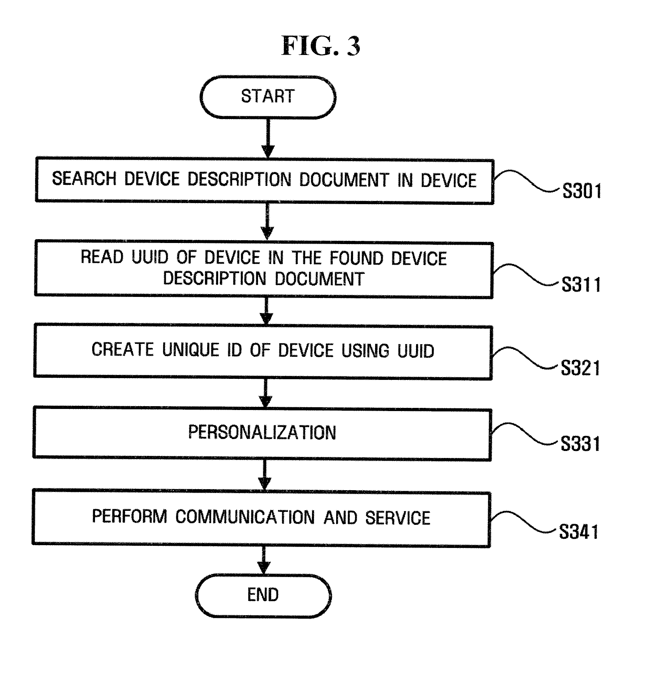

FIG. 3 is a flowchart of the process of creating a unique identifier using FIG. 2.

Elements described in FIG. 2 will be omitted. A process of creating a unique ID will be described in the following.

The searcher 210, as the apparatus 200 included in a predetermined device that joins a predetermined network, searches the predetermined device for a device description document (S301).

The reader 220 reads the device UUID of the found device description document (S311).

The creator 230 creates a unique ID of the predetermined device using the read UUID S321. Preferably, the unique ID is the same as the UUID.

The certificate-requesting unit 240 transmits the created unique ID to the certificate authority in order to request a confirmation that the predetermined device uses the unique ID as identifying information (S331). Through the conventional personalization, it is also possible to perform a communication between devices. Each operation for the personalization will described with reference to FIG. 4.

The NEMO-enabled device can communicate with other NEMO-enabled devices using personality information including its unique ID obtained through the personalization and a certificate (S341). In a process of performing a communication between the NEMO-enabled devices (a first device and a second device), when the first device encodes and sends a message to the second device, the first device requests a public key from the second device, encodes a message using the received public key, and sends the message to the second device. The second device decodes and checks the message received from the first device using its individual key. Accordingly, it is possible to perform a communication that assures confidentiality, integrity, and authentication between the DRM-enabled devices. A device having NEMO ID information can access and use DRM content. By using the unique ID, a communication between NEMO-enabled devices and various services may be provided based on a network infrastructure, including UPnP, that has a discovery function.

FIG. 4 depicts a personalization (S331) consistent with an exemplary embodiment of the present invention.

Descriptions of elements illustrated in FIG. 1 have been omitted. A device, which has the unique ID created using the unique ID creator illustrated in FIG. 2, performs a personalization with the certificate authority, which will be described as follows. A NEMO personalization is described as an example in the following operations. A more detailed description for the NEMO personalization can be found in "NEMO Personalization Service".

The certificate-requesting unit 240 transmits the unique ID created by the creator 230 to the certificate authority in order to request a confirmation that the corresponding device (NEMO-enabled device) uses the unique ID as identification information (S401). Here, the NEMO-enabled device and the certificate authority share a secret. When the NEMO-enabled device requests the personalization, the shared secret may be used in order for the certificate authority to determine whether the NEMO-enabled device has a proper right.

The certificate authority verifies whether the NEMO-enabled device is legal using the secret value shared with the NEMO-enabled device, creates personality information including the received unique ID information, and transmits the information as a respond message to the NEMO-enabled device (S411 and S421). More particularly, the personality information may further include a certificate containing a public key, individual keys, and information related to a fingerprint. The certificate may be created using the unique ID and the public key.

The NEMO-enabled device verifies the certificate in the received respond message, and obtains the personality information (S431).

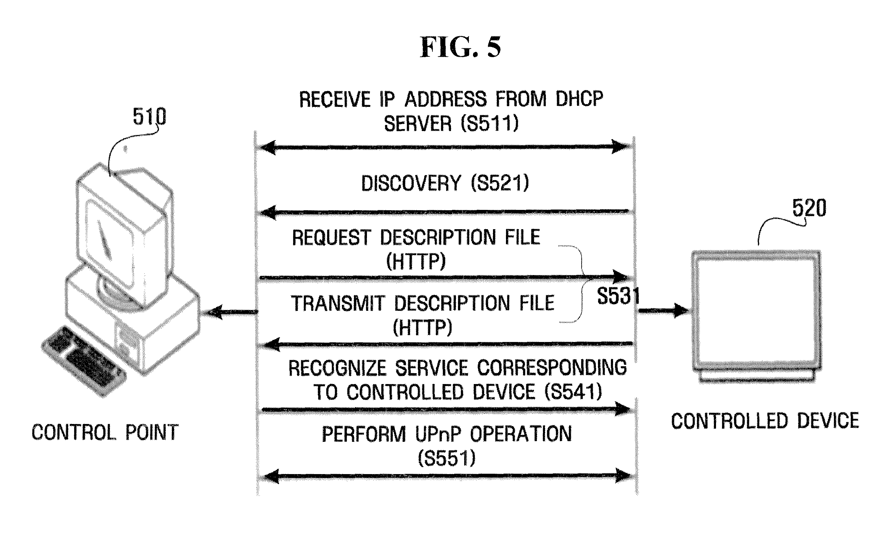

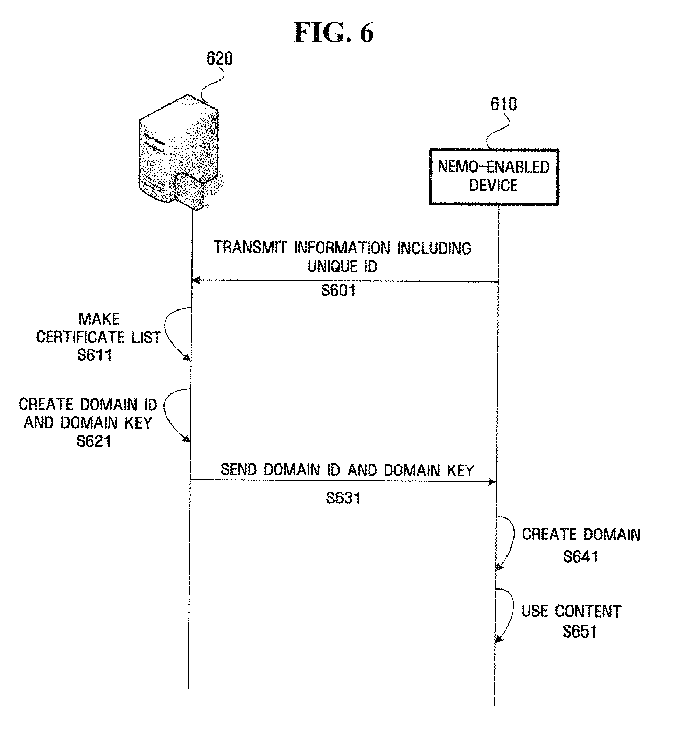

Various examples using the created unique ID will be described with reference to FIGS. 5 and 6.

FIG. 5 depicts an UPnP operation performed between a control point and a controlled device consistent with an exemplary embodiment of the present invention.

When the NEMO-enabled device that supports a NEMO service exists on an UPnP network, the NEMO-enabled device creates a unique ID through the above operations S301 through S321 of FIG. 3, and obtains personality information from the certificate authority using the unique ID created as illustrated in FIG. 4. The personality information may include the unique ID, a certificate containing a public key, and individual keys, and information related to a public key. Hereinafter, communication between the NEMO-enabled devices and a content use using a communication method embodied in UPnP will be described in detail.

As shown in FIG. 5, a UPnP operation is performed between a control point 510 and a controlled device 520. It is assumed that the controlled device 520 is the NEMO-enabled device, and has personality information.

A basis of the UPnP network is TCP/IP protocol that has an addressing function. Each controlled device 520 has to have a dynamic host configuration protocol (DHCP) client. When the controlled device 520 is first connected to a network, it searches a DHCP server.

If the DHCP server is found, the corresponding controlled device 520 uses the allotted IP address. If there is no available DHCP server, the controlled device 520 uses "auto IP" for obtaining an address (S511).

After the controlled device 520 is connected to the network and the proper address is specified, a searching operation can be performed in a discovery operation of UPnP (S521). The searching operation is processed using simple service discovery protocol (SSDP). When the controlled device 520 is added to the network, SSDP notifies a service provided by the controlled device 520 to the control point 510 on the network.

In the description operation S531, the control point 510 searches the controlled device 520, but the control point 510 has little information on the controlled device 520. The control point 510 has to check a searching message and a device description document of the controlled device 520 from a URL provided by the controlled device 520 in order to interact with the controlled device 520 by closely understanding information on the controlled device 520 and its function. The controlled device 520 may notify other device information including a unique ID created through the apparatus 200 to the control point 510. The device information may include a list related to a NEMO service provided by the controlled device 520. If the unique ID and the list related to the NEMO service are tied, the ID is set to the same value as the UUID, the control point 510 can recognize a device and a service provided by the device through a single value of the above operations S521 and S531.

The control point 510 can recognize the NEMO-enabled device that supports the NEMO service through information provided by the controlled device 520 (S541). A communication method embodied in the existing UPnP can be applied to the NEMO-enabled device. The communication can be performed between devices that provide a specific service using the existing communication method by the above-described basis in Bluetooth networks, JINI networks, UDDI networks including UPnP. Here, the unique ID of the device is actively used.

The UPnP operation is performed through an operation such as a control, an event, or a presentation (S551). In the control operation, the control point 510 performs an essential operation for controlling the controlled device 520 after obtaining a description of the controlled device 520. The control point 510 sends an order to operate a service of the controlled device 520 in order to control the controlled device 520. The control point 510 sends a control message to a control URL (in the device description document of the controlled device 520). The control message is expressed by XML using simple aspect access protocol (SOAP). The service provides a specific operation value or an error code as a respond for the control message. In the event operation, each controlled device 520, if its state is changed after receiving the order, notifies the change to the control point 510 through an event message. The message includes names and values of one or more state variables, which is expressed as XML and is formatted through generic event notification architecture (GENA). The event is continuously notified to the control point 510 after being periodically updated, or formatted using the GENA. In the presentation operation, if the controlled device 520 has a URL for a presentation operation, the control point 510 can search for a page, and load the page on a browser through the URL. A user can control the controlled device 520 using the page, or inquire on the state of the controlled device 520. A level of performing these above functions depends on the presentation page and a specific function of the controlled device 520.

FIG. 6 illustrates a case where a NEMO-enabled device uses content on an UPnP network consistent with an exemplary embodiment of the present invention.

The unique ID may be used in making a certificate list. When a NEMO-enabled device 610 sends a certificate, its unique ID, and a public key to a server 620 that provides content (including DRM content), the server 620 verifies legitimacy of the NEMO-enabled device 610 by verifying the certificate, and then makes a certificate list where the unique ID and the public key of the NEMO-enabled device 610 is recorded (S601 and S611).

After the server 620 makes the certificate list, a unique domain ID and a domain key are created using information on the NEMO-enabled device 610 in the list and random numbers created by the server 620 (S621). The domain key, as a secret key shared by only NEMO-enabled devices that belong to the domain formed by a user's selection, may be changed whenever members of the domain are changed. The domain ID may be used as an identifier for distinguishing the domain from other domains.

The server 620 encodes the domain ID and the domain key using the public key of each NEMO-enabled device 610, and transmits them to the confirmed NEMO-enabled device 610. The NEMO-enabled device 610 reconstructs the domain key using its secret key in order to form a domain for using content (S631 and S641). When the domain for sharing content is formed, the server 620 encodes content using a content key that is encoded by the domain key.

The NEMO-enabled device 610 decodes the encoded content using the domain key, and uses the content.

According to the present invention, it is possible to connect a device that supports a specific service with a communication environment of the existing network infrastructure, thereby performing a smooth integration, and providing a communication between devices and a content service.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A unique-ID-creating apparatus (200) for creating a unique ID using a universally unique identifier (UUID) in a predetermined device connected to a predetermined network, the apparatus comprising:
a searcher (210) that searches the predetermined device for a device description document;
a reader (220) that reads the UUID of the predetermined device; and
a creator (230) that creates the unique ID of the predetermined device using the read UUID.

2. The apparatus of claim 1, wherein the predetermined device supports a networked environment for media orchestration (NEMO) service for digital rights management (DRM) interoperability.

3. The apparatus of claim 2, wherein the network is one of a Universal Plug and Play (UPnP) network, a Bluetooth network, a JINI network, or a Universal Description Discovery and Integration (UDDI) network, and the created unique ID is set to a same value as the UUID.

4. The apparatus of claim 3, wherein, when the predetermined device is added to the UPnP network, the control point of the UPnP network receives the unique ID and a supportable service list, and recognizes the predetermined device and a service provided by the predetermined device.

5. The apparatus of any preceding claim, further comprising a certificate-requesting unit (240) that requests a confirmation that the predetermined device uses the unique ID as identification information by transmitting the created unique ID to a certificate authority.

6. A unique ID-creating method for creating a unique ID using a universally unique identifier (UUID) in a predetermined device connected to a predetermined network, the method comprising:
searching the predetermined device for a device description document;
reading the UUID of the predetermined device; and
creating the unique ID of the predetermined device using the read UUID.

7. The method of claim 6, wherein the device supports a networked environment for media orchestration (NEMO) service for digital rights management (DRM) interoperability.

8. The method of claim 7, wherein the network is one of a Universal Plug and Play (UPnP) network, a Bluetooth network, a JINI network, or a Universal Description Discovery and Integration (UDDI) network, and the created unique ID is set to a same value as the UUID.

9. The method of claim 8, wherein, when the predetermined device is added to the UPnP network, the method further comprising recognizing the predetermined device and a service provided by the predetermined device by receiving the unique ID and a supportable service list.

10. The method of any of claims 6 to9, further comprising: requesting a confirmation that the predetermined device uses the unique ID as identification information by transmitting the created unique ID to a certificate authority.
